# EUROPEAN PATENT APPLICATION

(11) **EP 1 209 650 A1**
(43) Date of publication of application: **29.05.2002**
(21) Application number: 00950151.1
(22) Date of filing: 17.07.2000
(51) Int. Cl.: G09G 3/18, G09G 3/36

(54) **DATA DISPLAY MODULE**

(30) Priority: 04.08.1999 RU 99117000
(71) Applicant: Optiva, Inc., South San Francisco, CA 94080-1962 (US)
(72) Inventor: LAZAREV, Pavel Ivanovich, Moscow, 119633 (RU); BOBROV, Jury Alexandrovich, Moscow, 103575 (RU); NAZAROV, Viktor Vasilievich, Odintsovo, Moskovskaya obl., 143000 (RU)
(74) Representative: Allard, Susan Joyce
(86) International application number: RU0000300
(87) International publication number: WO0111597

(57) **Abstract**

The invention relates to data display and processing devices, and more particularly to liquid crystal displays, and can be used in viewing devices.

The inventive data display module contains a liquid crystal display consisted of two in-plane plates with electrodes and polarizers, whereby a liquid crystal and a supply cell which is electrically connected to the display are located between said plates. The supply cell, which consists of as at least one solar element or a battery of solar cells, is located or formed on the rear side of the display plate, whereby the display elements located on the light-receiving side of the cell are at least partially made of optically transparent materials. A touch screen and/or a graphic tablet can be formed on the front side of the display.

## Description

### Field of the Invention

This invention pertains to devices displaying and processing data, in particular to liquid crystal displays, and can be used in the design of displays of various purposes.

### Related Art

A data display module based on liquid crystals includes, besides a number of functional elements, a liquid crystal display and a power source as the necessary elements. The liquid crystal displays are usually implemented as flat cuvettes formed by two plane-parallel plates, on the internal surfaces of which electrodes made of optically transparent electrically conductive material, for example tin dioxide, have been formed. The polarizer layers are formed on the plate surfaces, while the cavity between the plates is filled with the liquid crystal [US 5528398 A, 1996]. The plates can be made of glass or plastic, for example Dacron, or other material suitable for their manufacturing. The power sources used in such devices are chemical power sources of either rechargeable or non-rechargeable type, or photocells, or both electrochemical and solar elements simultaneously.

There is a known data display module with a solar battery as the power source WO 94/00895 A1, 1994]. The major drawback of devices with electrochemical power source is the finite lifetime of the power source, and the impossibility of device operation without its replacement. The drawback of the device with a power source based on light-to-electrical energy transformation is the placement of the photocell on the extra area of the data display module, which causes inconveniences related to using large-screen liquid crystal displays, since it essentially increases their linear dimensions, as well as the weight and material consumption related to the increased device area, and the necessity to protect the power element and mechanically strengthen the design. Increasing dimensions and weight of the device makes casual mechanical damage more probable. Besides, if illumination is poor, functioning of the display and the device as a whole becomes impossible. Using combination of the two types of power sources allows prolonging the lifetime of the electrochemical power source by, for example, recharging it using the photocell. Such design also allows using the device in case of poor illumination. However, such device has the same essential drawback as the data display module with the photocell alone: it has much larger linear dimensions, weight, and material consumption compared to the device without a photocell.

### Summary

The technical result of this invention is the simplification of the module design, decrease of dimensions and cost price, and increase of mechanical durability. Besides that, the invention provides protection of the rear side of the display against moisture and other influences without forming additional elements. In certain particular embodiments, the invention allows combining the display and the power supply in a single working volume, so the same device component may be used for both the display and the power element (for example, the bottom plate of the display). The invention also allows to optimize the manufacturing process and to use the electrochemical cell and the photocell together without increasing the module dimensions.

The technical result is achieved by the fact that in the data display module, which comprises a liquid crystal display consisting of two plane-parallel plates with electrodes and polarizers assembled to form a cavity filled with liquid crystal, and comprising a power element represented by at least one solar element electrically connected to the display, the solar element is located or created on the rear plate of the display, with the elements of the display located on the light-absorbing side of the power element's surface and at least partially made of optically transparent materials.

When the components of the module are arranged according to the disclosure, a part of the light energy can be absorbed by the structure of the display, which, in turn, will lower efficiency of light energy transformation and efficiency of the power element. However, this decrease can be partially or completely compensated by increasing the solar battery area. Besides that, using such module in conjunction with an electrochemical power source allows prolonging the lifetime of electrochemical power source by recharging it. In this case the display's rear side also becomes protected from moisture, chemical damage etc.

The power supply may be made of several solar elements forming a solar battery. The quantity of the solar elements is determined by the purpose of the module, as well as its power consumption and efficiency of a single element. The solar element may be placed on and attached to the rear plate of the display in such a manner that its light-absorbing surface is located on the outer surface of the rear plate of the display, while the display's components including its rear plate are made of optically transparent material. The polarizer layer on the rear plate of the display may be located either on the internal surface of the plate, or on its external surface. Any optically transparent glue can be used to attach the solar elements, provided it does not damage the integrity of the module's elements.

If the power source is positioned in the above described way, the display's rear plate may be made thinner, or a thin membrane may be formed at the location of the power element, or the region of the rear plate may be removed thus forming a frame, into which the power element will be inserted.

The solar element may be created on, or attached to, the internal surface of the rear plate of the display. Fabrication of the solar element can be performed in the process of fabricating the display, wherein the rear plate of the display would serve as the substrate for the solar element. The display will then be a reflective type display, and the polarizer layer on the rear plate will be located on its internal surface.

The rear plate of the display may be made of a single-crystal or polycrystalline or amorphous silicon, or of glass, or of laysan (PET), or be a structure where a solar element has been built into its surface layer. Then, the display will be of the reflective type, on at least a part of the internal surface of the rear plate of which one may place a reflective layer of a semi-transparent material.

The front plate of the display may be made of any optically transparent material, for example, plastic.

The module may additionally contain a touch screen and/or a digital graphic tablet, wherein at least a part of the front plate of the display may be simultaneously the plate of the touch screen and/or the digital graphic tablet.

Use of a touch screen and/or a digital graphic tablet is known, where those elements are activated independently from each other, while they are incorporated in a single module with the liquid crystal display (with the common front plate). This allows expanding operation functionality of the display due to the opportunity to input and process the data shown on the display. The display in this case not only serves for displaying the data, but also for visualization of user feedback [EP 0421025 A1, 1991]. However, using a power element, an liquid crystal display, and a touch screen in the same area and/or in the same volume has not been known until now. The present invention can be useful to the engineers when designing and optimizing parameters of data display devices.

The electrode system of the touch screen may be placed in the planes of where of the display's electrodes are positioned, which will allow combining the processes of their manufacturing.

Texture may be formed on the internal surface of at least one of the display plates. Parameters of the texture may be determined by the condition to maintain alignment of the liquid crystal molecules and/or the uniform distribution of the liquid crystal over the cavity's volume.

The texture of the plates on which the solar element is formed may have parameters chosen from operating conditions of the solar element.

Fastening the display plates may be made detachable.

The module may be a component of an electronic card. At least one plate of the display may then be a plate of the electronic card.

At least one of the polarizers may be implemented as a molecularly oriented layer capable to form lyotropic liquid crystal phase of dichroic dye of the formula

A(SO₃M)ₙ,

where M is a cation, A is a chromogenic fragment, and n is an integer.

### Brief description of drawings

Designs of the data display modules schematically represented in Figs. 1-3 are examples of embodiment of the disclosed invention.

In Fig.1, a data display module is schematically shown with a reflective-type liquid crystal display and a solar battery formed on the internal surface of the rear plate of the display.

In Fig.2, a data display module is schematically shown with a liquid crystal display and a solar battery fixed (glued) to the outside surface of the rear plate of the display.

In Fig.3, a data display module is schematically shown with a liquid crystal display and a solar battery, with a touch screen formed on the front plate of the display.

### Description of the preferred embodiments

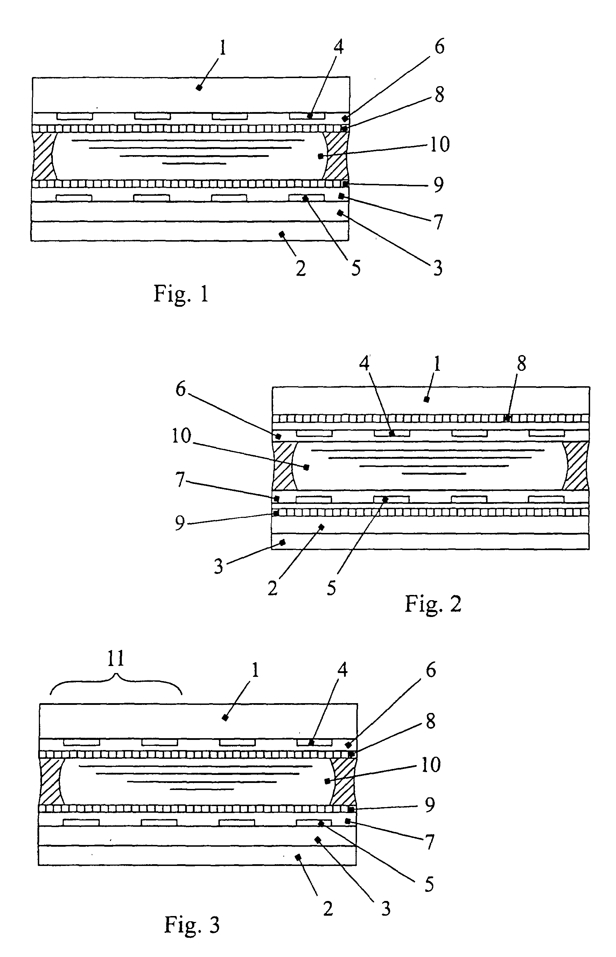

The data display module illustrated in Fig.1 contains a liquid crystal display, which is formed by two plates 1 and 2. Panel 1 can be made of any optically transparent material. Panel 2 in this case can be the base for attaching a thin-film or thick-film solar battery or solar element. Panel 2 can also be the substrate for forming a thin-film or thick-film solar element or solar battery 3. In this case, plate 2 can be made of single-crystal silicon, on the surface of which the solar elements are formed via a standard technology. It can also be made of another material, on whose surface a film of single-crystal, polycrystalline, or amorphous silicon is deposited using any known method, and the solar elements are formed on the film using a standard technology. The system of connecting elements and contacts is not shown in the Figure. The interconnections and contacts are implemented so as to ensure electrical connection of the power element with the liquid crystal display. Standard technology can also be used to form them.

The internal surfaces of plates 1 and 2 facing the layers of nematic liquid crystal 10 have optically transparent electrodes 4 and 5 deposited onto them. The electrodes 4 and 5 can be implemented in the form of active matrices. Insulating films 6 and 7 made of optically transparent polymeric or other material are deposited on top of the transparent electrodes. The films smooth out the relief and render homogeneous properties to the entire surface.. Surfaces of those films can be made directionally anisotropic by rubbing or otherwise. This would ensure better alignment of molecules of polarizing coatings 8 and 9, which are deposited on these films and placed on plates 1 and 2 with their axes mutually perpendicular. The polarizing coatings themselves have the alignment influence on the molecules of the nematic liquid crystal. Besides that, a semi-transparent reflector can be formed, which can simultaneously perform the function of electrodes on the rear plate of the display, if it is manufactured from electrically conductive material. The function of the reflector can also be performed by the light-absorbing surface of the solar element, on which the appropriate texture can be formed.

In another embodiment, polarizing coatings 8 and 9, protected by insulating films 6 and 7, are initially deposited onto surfaces of plates 1 and 2, and then transparent electrodes 4 and 5 are placed. The films aligning the nematic may be deposited on top of the electrodes. With this arrangement of the components, smoothness of the surface is provided as required for the polarizing coating, as well as its isolation from the liquid crystal layer, which prevents ions and molecules of other substances possibly contained in the polarizing coating from penetrating the layer.

In any case, all elements of the display except its rear plate should be made of optically transparent materials, to preserve efficiency of the solar element. Besides that, the specified elements can occupy only a part of surfaces of the display plates, leaving another part for the solar battery. Spacers (not shown in the Figure) may be formed in that part of the display to preserve the desired thickness of the liquid crystal layer. Then, only a portion of the display's elements will be placed in the path of the light beam falling onto the solar element. That may be only the plate 1 and the liquid crystal layer, or plate 1, the liquid crystal layer, and the polarizer layers, while the electrodes, the insulating layers, and the reflecting layers will be located in another part of the display.

Figure 2 schematically illustrates a data display module with a liquid crystal display and a solar battery 3. The battery's light-absorbing surface is glued with optically transparent glue to the outside surface of the rear plate 2 of the display. In this case, layers of polarizing coating 8 and 9 can be deposited either on the internal or the external sides of plates 1 and 2. Then, the electrodes, the insulating layers and the polarizing coating layers can also occupy only a part of the liquid crystal display, namely, its working area. In its other part, only plates of the display and the liquid crystal layer will be in the path of the light beam to the solar element's surface. The solar element or battery can occupy the entire surface of the plate, or only its part where elements of the display are partially absent. In this embodiment, plate 2 should also be made of optically transparent material. As already noted, it is possible to make the rear plate of the display thinner at the location of the power element attachment, or even to form a window (or, accordingly, a frame), into which the power element is inserted.

Figure 3 schematically illustrates a data display module with the liquid crystal display and solar battery 3, including a touch screen and/or a digital graphic tablet 11, which can be activated independently from each other. In this case, at least, a part, and possibly, the entire plate of the display can simultaneously be the front plate of the touch screen and/or the digital graphic tablet. In this embodiment, functions of the module are considerably expanded, as the user feedback can be implemented because it is possible to directly input the necessary information during operation of the module. The maximal degree of integration of the module's elements along with the maximal material savings are achieved when the rear plate of the display is simultaneously used as the substrate of the power element/solar battery. This also provides vast opportunities for optimization of manufacturing process of the module.

Embodiment of the claimed invention can be exemplified by the reflective-type liquid crystal display with a solar battery and a touch screen.

To manufacture a data display module, two plastic, e.g. lavsan, plates with barrier coatings were used. The barrier coating can be implemented as a layer of SiO₂, TiO₂, Al₂O₃, or other transparent material non-pervious for water molecules. It is intended to protect the internal volume of the cell against penetration of water, diffusing from the atmosphere through the substrate material. Transparent electrodes are created on the front plate 1, on the barrier sublayer. On the rear plate 2, on the similar barrier sublayer, the structure with an amorphous hydrogenated silicon layer is created, in which a *p-n* junction along with the appropriate contacts for forming the solar element or solar battery are formed. The surface of plate 2 features a texture, which provides the reflecting effect, and which simultaneously serves as the electrode elements. Over that texture, an insulating sublayer is deposited providing more perfect alignment of the polarizer molecules. Polarizers are deposited onto surfaces of both plates. The polarizers are implemented of the molecularly oriented layers capable to form lyotropic liquid crystal phase of dichroic dye of the formula A(SO₃M)ₙ, where M is a cation, A - a chromogenic fragment, n-an integer.

This group of materials is known by their high parameters including high thermal stability and lightfastness, high polarizing characteristics etc. Besides that, the specified materials do not require special preliminary aligning treatment of the surface, on which the polarizing coating is to be formed [US 5739296 A, 1998].

The appropriate transparent electrodes of the display made of a mixture of indium dioxide and tin along with the insulating films are formed on each polarizer layer, and the cavity between the plates with the elements already formed on them is filled with liquid crystal. Digital graphic tablet for data input using a special utensil is created on a part of the front plate of the display. Between the contacts of the solar battery and the electrodes of the liquid crystal display, there are interconnections, which provide electrical contact of the display with the power element. Also, appropriate interconnections are implemented between the electrodes of the module and the electrodes of the digital graphic tablet so they could function together. The digital graphic tablet electrodes are implemented in the same planes as the display electrodes, to optimize manufacturing technology of the module. Accordingly, the plates 1 and 2 are made 0.1-1.0 mm thick, the polarizer layers are about 1 micron thick, the amorphous silicon surface layer of the plate 2 is about 1000 Å (Angstrom) thick, and the *p-n* junction for the solar elements is implemented using ion implantation. The area occupied by the liquid crystal is about 1-20 microns thick. The insulating layers are made of SiO₂ and 100-1000 Å (Angstrom) thick.

The presented embodiment examples of the disclosed data display module do not exhaust all variants of embodiment implied by this invention.

The principle of operation of the module can be described as follows. The module may be either an independent element or an integral part of any device utilizing an element for data display and input. The display's mode of operation can vary depending on the task. The task can be viewing the data present in the memory by the user using the display of the device, or updating the data if, for example, a touch screen for data input is present. The power element represented by a solar element or solar battery, possibly with an electrochemical power source also present, will provide electric power for both the display and the touch screen or graphic tablet.

The principle of operation of the module with the liquid crystal display of a reflective type based on 90°-twisted nematic is as follows. The non-polarized light flow falls on the indicator from the side of the first plate. After passing through plate 1 and transparent electrode 4, light becomes polarized while passing through polarizing coating 8. If the voltage on the electrodes is absent, the polarized light passes through the liquid crystal layer with 90° rotation of its polarization plane, then passes without attenuation through the second polarizing layer 9 and the transparent electrode 5, becomes reflected from the surface of plate 2, and passes back through the specified elements. The area of electrodes will then look bright. If voltage is applied to the electrodes, the twisted form of the nematic is transformed into the homeotropic form under the influence of the electric field. In the homeotropic form, the nematic's optical axis is perpendicular to the planes of plates 1 and 2, and the nematic no longer rotates the polarization plane of light passing through it. Accordingly, when light passes through the nematic layer, the direction of light polarization plane set by polarizer 8 will not change, and will be perpendicular to the polarization direction of the second polarizer 9 upon exit from the nematic. This will result in absorption of light by the latter polarizer, and the pertaining area will look dark. In the areas of the display with no electrodes, the twisted form of the nematic will always remain, and these areas will always look bright. A part of the light flow that reached the reflector is partially reflected from it, thus forming the bright background of the display. Another part will penetrate into the layer of *p-n* junction and become absorbed in it, causing formation of mobile charge carriers. The carriers will separate on the junction and create an electric field in the display's circuit, thus feeding the electronic data display module elements and/or recharging the chemical power element.

It follows from the text of the above description that the invention, within the essential attributes of the Claims, unequivocally provides achievement of the specified technical result.

### References

1. US 5528398 A, 1996.
2. WO 94/00895 A1, 1994.
3. EP 0421025 A1, 1991.
4. US 5739296 A, 1998.

## Claims

1. A data display module, comprising a liquid crystal display consisting of two plane-parallel plates with electrodes and polarizers, where the plates are assembled to form a cavity, which is filled with liquid crystal, and a power element represented by at least one solar element electrically connected to the display,
wherein the solar element is located or created on at least a part of the rear plate of the display,
with the elements of the display located on the light-absorbing side of the power element surface and at least partially made of optically transparent materials.

2. A module of Claim 1, wherein the power element is made of solar elements forming a solar battery.

3. A module according to Claim 1 or 2, wherein the power element additionally contains an electrochemical element.

4. A module according to any of Claims 1 to 3, wherein the solar element(s) is(are) placed on and attached to the rear plate of the display in such a manner that its (their) light-absorbing surface(s) is(are) located on a part of the outside surface of the rear plate of the display, while the display components including its rear plate are made of optically transparent material, while the polarizer layer on the rear plate of the display is located either on the internal surface of the plate, or on its external surface.

5. A module according to Claim 1, or 2, or 3, wherein the solar element(s) is (are) formed on or attached to the internal surface of the rear plate of the display.

6. A module according to Claim 5, wherein the solar element(s) is (are) formed on, or attached to, the internal surface of the rear plate of the display during its manufacturing in such a manner that the rear plate of the display is the substrate of the solar element, the display is a reflective type display, and the polarizer layer of the rear plate is located on its internal surface.

7. A module according to Claim 6, wherein the rear plate of the display is made of single-crystal or polycrystalline or amorphous silicon, or of glass, or of plastic, or it is represented by a structure on the surface layer of which the solar element is formed, while the display is a reflective type display, where either a reflective layer made out of a semi-transparent material is placed on at least a part of the internal surface of the rear plate of the display, or the light absorbing surface of the solar element(s) performs the function of the said layer.

8. A module according to any of Claims 1 to 7, wherein the front display plate is made of any polymer material, for example, plastic.

9. A module according to any of Claims 1 to 8, wherein the front plate of the display additionally contains a touch screen and/or a digital graphic tablet, with at least a part of the front plate of the display simultaneously being the plate of the touch screen and/or the digital graphic tablet.

10. A module according to Claim 9, wherein the electrode system of the touch screen is positioned in the planes of location of the display's electrodes.

11. A module according to any of Claims 1 to 10, wherein a texture is formed on the internal surface of at least one of the display plates.

12. A module according to Claim 10, wherein the texture of the plates on which the solar element is formed has parameters chosen in accordance with operating conditions of the solar element.

13. A module according to any of Claims 1 to 12, wherein at least one of the polarizers is located on the internal surface of one of the display's plates.

14. A module according to any of Claims 1 to 13, wherein at least one of the polarizers is implemented of a molecularly oriented layer capable to form lyotropic liquid crystal phase of dichroic dye of the formula A(SO₃M)ₙ, where M is a cation, A is a chromogenic fragment, and n is an integer.

15. A module according to any of Claims 1 to 14, wherein the fastening of the display plates is made detachable.

16. A module according to any of Claims 1 to 15, wherein the module represents a component of an electronic card.

17. A module according to Claim 16, wherein at least one plate of the display represents a plate of an electronic card.
